**Europäisches Patentamt**

**European Patent Office**

**Office européen des brevets**

(19)

(11) Veröffentlichungsnummer: **0 414 098 A2**

# (12) EUROPÄISCHE PATENTANMELDUNG

(21) Anmeldenummer: **90115561.4**

(22) Anmeldetag: **14.08.90**

(51) Int. Cl.5: **B01D 39/14**

(30) Priorität: **23.08.89 DE 3927727**

(43) Veröffentlichungstag der Anmeldung:
**27.02.91 Patentblatt 91/09**

(84) Benannte Vertragsstaaten:
**CH DE FR GB IT LI NL SE**

(71) Anmelder: **TECHNISCHE TEXTILIEN LÖRRACH GMBH**
**Teichstrasse 56**
**D-7850 Lörrach 1(DE)**

(72) Erfinder: **Der Erfinder hat auf seine Nennung verzichtet**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**D-7800 Freiburg(DE)**

(54) **Filterelement sowie Verfahren zur Herstellung eines Filterelementes und Vorrichtung zur Durchführung des Verfahrens.**

(57) Die Erfindung betrifft ein Filterelement mit einem grobporigen, unbiegsamen Grundkörper (2), der vorzugsweise zuströmseitig mit einer Oberflächenschicht mit kleinen Poren versehen ist. Kennzeichnend für das erfindungsgemäße Filterelement ist, daß der Grundkörper (2) im wesentlichen aus gesintertem Metall, Kunststoff, Glas oder keramischem Material besteht) und daß als Oberflächenschicht mit kleinen Poren zumindest eine dünne folienförmige Membran (3) aus Kunststoff, Metall oder Keramik dient, die mit dem Grundkörper (2) untrennbar verbunden ist. Die Erfindung betrifft auch ein Verfahren zur Herstellung eines derartigen Filterelementes, bei dem auf den grobporigen, unbiegsamen Grundkörper (2) zumindest eine dünne, kleine Poren aufweisende folienförmige Membran (3) aufgelegt und anschließend mit dem Grundkörper untrennbar verbunden wird.
Eine Vorrichtung zur Durchführung des Verfahrens sieht erfindungsgemäß vor, daß die Vorrichtung (1) eine Halteeinrichtung für den Grundkörper (2) hat, die in einer Ebene bewegbar und/oder um ihre Längsachse (4) drehbar ist, daß sie eine Folien-Vorratsrolle (5) aufweist, und daß eine den Grundkörper (2) beaufschlagende, drehbare Andruckrolle (6) zum Auflegen und Andrücken der von der Vorratsrolle (5) abgerollten folienförmigen Membran (3) vorgesehen ist.

Fig. 1

EP 0 414 098 A2

# FILTERELEMENT SOWIE VERFAHREN ZUR HERSTELLUNG EINES FILTERELEMENTES UND VORRICHTUNG ZUR DURCHFÜHRUNG DES VERFAHRENS

Die Erfindung betrifft ein Filterelement mit einem grobporigen, unbiegsamen Grundkörper, der vorzugsweise zuströmseitig mit einer Oberflächenschicht mit kleinen Poren versehen ist. Die Erfindung betrifft auch ein Verfahren zur Herstellung eines Filterelementes sowie eine Vorrichtung zur Durchführung des erfindungsgemäßen Verfahrens.

Man kennt bereits eine Vielzahl unterschiedlicher Filterelemente, die sich für die verschiedensten Anwendungsbereiche mehr oder weniger gut eignen.

So kennt man beispielsweise auch Filterelemente, die im wesentlichen aus einem engmaschigen Gitter aus Metall oder textilen Stoffen mit nebeneinanderliegenden Fäden oder gelochten Flächen bestehen. Derartige vorbekannte Filter bewirken eine Oberflächenfiltration, bei der die zurückgehaltenen Feststoff-Partikel an der Oberfläche des Filtermediums bleiben.

Jedoch ist bei diesen vorbekannten Filterelementen die Wirksamkeit des Gitters aus herstellungsbedingten Gründen begrenzt, weil beispielsweise die Fadenabstände bei Geweben nicht unbegrenzt nahe aneinander zu liegen kommen und somit die Durchströmöffnungen gewisse untere Grenzwerte nicht unterschreiten können. Feinstteile können praktisch nicht mehr abgeschieden werden.

Man hat daher die Filterwirkung durch Filterelemente zu verbessern versucht, bei denen, in Strömungsrichtung gesehen, unregelmäßig angeordnete Fasern in vielen Schichten hintereinander angeordnet sind und die Poren einer vorderen Schicht durch die dahinter liegenden Fasern zusätzlich verkleinert werden. Bei diesen vorbekannten und beispielsweise aus Filzen oder Vliesen bestehenden Filterelementen wird ein weiterer Abscheideeffekt dadurch erreicht, daß in Folge der Massenträgheit die Feststoff-Partikel der erzwungenen Richtungsänderung bei der Umströmung der einzelnen Fäden nicht folgen können und sich dann im Sinne einer Tiefenfiltration auf oder zwischen den Fäden ablagern.

Durch eine Umkehrung des Filtrationsstromes werden von Zeit zu Zeit die im Filterelement abgeschiedenen Staubpartikel abgeblasen und/oder abgeschüttelt und mittels eines Staubsammelbehälters aus dem System entfernt. Dabei werden die rohr- oder flächenförmig gestalteten und bei normaler Filtrationsrichtung durch Drahtkäfige gestützten Filterelemente aufgeblasen, was eine Aufweitung der Poren des beweglichen Filzes oder Vlieses und den Durchtritt eines Teiles der bereits abgeschiedenen Feststoff-Partikel zur Folge hat.

Man hat daher auch bereits Filterelemente geschaffen, die aus einem unbiegsamen Filterkörper bestehen, der während des Filtrationsvorganges keine Stützkonstruktion benötigt und im Abreinigungsfall, bei umgekehrter Strömungsrichtung, sich auch nicht aufweitet und damit keinen Staubdurchtritt verursacht. Derartige Filterelemente werden beispielsweise in einem Sinterverfahren aus Pulvergemischen von Metallen, Thermoplasten oder anderen anorganischen Stoffen, wie beispielsweise Keramik oder Glas, hergestellt Diese im Sinterverfahren hergestellten Filterelemente haben Porenweiten von etwa 60 bis 30 $\mu$m.

Mit kleiner werdendem Porendurchmesser und wachsender Dicke der durchströmten Wände steigt jedoch auch der vom Filterelement bewirkte Widerstand und Druckverlust.

Man hat daher auch bereits ein Filterelement der eingangs erwähnten Art geschaffen, das aus einem grobporigen, unbiegsamen Grundkörper aus gesinterten Metallteilchen und, an der stromaufwärtigen Oberfläche, aus gesinterten Metallteilchen von relativ geringer Abmessng besteht (vgl. DE-OS 28 20 057). Dabei bilden die an der stromaufwärtigen Oberfläche liegenden Metallteilchen dieses vorbekannten Filterelementes eine dünne Oberflächenschicht mit kleinen Poren.

Diese feinen Metallteilchen sind bei der Herstellung dieses vorbekannten Filterelementes in einer Aufschlämmung enthalten, die durch den rohrförmigen Grundkörper gepumpt wird. Ein Teil dieser Ausschlämmung wird über eine weitere Pumpe als Abwasser aus dem Grundkörper herausgepumpt. Während dabei größere Metallteilchen die Innenhöhlung des rohrförmigen Grundkörpers lediglich durchströmen, setzen sich kleinere Metallteilchen in den Poren des Grundkörpers ab. Durch einen kurzen Impuls von unter Druck stehendem Abwasser werden diese feineren Metallteilchen an der Innenoberfläche des Grundkörpers verdichtet. Zur Fertigstellung des Filterelementes werden diese im Grundkörper als Oberflächenschicht eingebetteten Metallteilchen anschließend in ihrer Lage gesintert. Auf diese Weise entsteht ein leicht und wirksam zu reinigendes Filterelement mit einem Filtrationsgrad und einer ausreichenden mechanischen Festigkeit, das durch seine gute Permeabilität einen akzeptablen niedrigen Rückdruck aufweist.

Jedoch entsteht bei diesem vorbekanntem Filterelement die feinkörnige, oberfläche Partikelschicht mit zufallsbedingter Porengröße. Dabei ist die Schichtdicke dieser Oberflächenschicht je nach der Porenweite des Grundkörpers verschieden groß, und zwar in Abhängigkeit von der variablen, zufallsbedingten Porenweite des Grundkörpers, in dessen kleineren Poren - bedingt durch die Kapillarwirkung dieser Poren - die Suspension höher steigen kann. Da insbesondere bei dem gesinterten Pulvermaterial des Grundkörpers dessen Porenweite in einem größeren Bereich schwankt, entsteht aus der verschieden großen Dicke der Oberflächenschicht ein verschieden großer Druckverlust in den Einzelporen, wenn das zu reinigende Medium das Filterelement durchströmt.

Die erzielbare Porengröße ist ferner dadurch beschränkt, daß die zur Herstellung erforderliche Suspension stabil sein muß, d. h. sich nicht entmischen darf. Die suspendierten Feststoffpartikel dürfen daher bestimmte maximale Korndurchmesser nicht überschreiten.

Zudem kann auch die Entsorgung der Suspension problematisch sein.

Es besteht daher die Aufgabe, ein leicht zu reinigendes Filterelement der eingangs erwähnten Art zu schaffen, das bei der Durchströmung nur einen vergleichsweise geringen Gesamtdruckverlust bewirkt und dessen auch einer Oberflächenfiltration dienende Oberflächenschicht mit kleinen Poren praktisch eine definierte Dicke mit gleichmäßig großen Porendurchmessern hat.

Darüber hinaus besteht auch die Aufgabe, ein nur mit geringem Aufwand verbundenes Verfahren zur Herstellung eines derartigen Filterelementes sowie eine Vorrichtung zur Durchführung dieses Verfahrens zu schaffen.

Die erfindungsgemäße Lösung besteht bei dem Filterelement der eingangs erwähnten Art insbesondere darin, daß der Grundkörper im wesentlichen aus gesintertem Metall, Kunststoff, Glas oder keramischen Material besteht, und daß als Oberflächenschicht mit kleinen Poren zumindest eine separate blatt- oder folienförmige Membran aus Kunststoff, Metall oder Keramik vorgesehen ist, und daß diese Membran mit dem Grundkörper untrennbar verbunden ist.

Da als Oberflächenschicht eine dünne, kleine Poren aufweisende folienSförmige Membran dient, hat das erfindungsgemäße Filterelement - unabhängig von.der Porengröße des Grundkörpers-eine etwa gleichmäßig dicke, oberflächliche Filterschicht. Durch die gleichmäßige und vergleichsweise geringe Dicke der als Oberflächenschicht dienenden folienförmige Membran kann der vom erfindungsgemäßen Filterelement beim Durchströmen bewirkte Gesamtverlust erheblich verringert werden; darüber hinaus wird praktisch ein konstanter Druckverlust bewirkt. Somit setzt das erfindungsgemäße Filterelement trotz seines hohen Filtrationsgrades und seiner guten, einer leichten Reinigung entgegenkommenden Steifigkeit einem durchströmenden Medium nur einen vergleichsweise geringen Rückdruck oder Widerstand entgegen.

Hinzu kommt, daß die glatte Oberfläche des Filterelementes an dieser vorzugsweise zuströmseitigen Oberflächenschicht ein leichtes Abfallen des abgeschiedenen Staubes oder dgl. Feststoffpartikel von der Filteroberfläche begünstigt. Dabei wirkt die glatte Folienoberfläche auch der Ausbildung eines dickeren und mit einem höheren Widerstand an der Oberfläche verbundenen Staubkuchen oder dgl. entgegen. Die Porengröße dieser folienförmigen Membran ist bei dem erfindungsgemäßen Filterelement frei wählbar.

Während sich zur Herstellung des Grundkörpers gesintertes Metall, Glas oder keramisches Material eignet, ist die kleine Poren aufweisende Oberflächenschicht aus Kunststoff, Metall oder Keramik hergestellt.Dabei ist der unbiegsame Grundkörper, der auch eine rohrförmige oder flächenförmige Gestalt haben kann, untrennbar mit der folienförmigen Membran verbunden. Durch die untrennbare Verbindung der dünnen folienförmigen Membran mit dem unbiegsamen Grundkörper wird die Betriebssicherheit dieses Verbundwerkstoffes erhöht und weitgehend verhindert, daß die für sich allein oder in Verbindung mit einem biegsamen Grundkörper leicht eintretende Beschädigung der folienförmigen Membran durch Knicken zu Brüchen und nachfolgendem Staubdurchtritt führt.

Bei dem Herstellungsverfahren der eingangs erwähnten Art besteht die erfindungsgemäße Lösung insbesondere darin, daß auf einen grobporigen, unbiegsamen Grundkörper zumindest eine dünne, kleine Poren aufweisende folienförmige Membran aufgelegt wird, und daß diese als Oberflächenschicht des Filterelementes dienende(n) folienförmige(n) Membran(en) anschließend mit dem Grundkörper untrennbar verbunden wird (werden). Somit kann mit geringem Aufwand ein Filterelement hergestellt werden, dessen kleine Poren aufweisende und als Oberflächenschicht dienende folienförmige Membran praktisch eine gleichmäßige Dicke und eine glatte Oberfläche hat. Je nach den zu ihrer Herstellung verwendeten Materialien werden der Grundkörper und die folienförmige Membran durch Verschmelzen, durch Verkleben oder durch mechanisches Haften miteinander verbunden. Dabei sind die trockene Handhabung und der Wegfall der Entsorgung einer Suspension weitere Vorteile des erfindungsgemäßen Herstellungsverfahrens.

Eine besonders vorteilhafte Weiterbildung des erfindungsgemäßen Verfahrens sieht vor, daß zum Auflegen der folienförmigen Membran(en) ein Unterdruck am Grundkörper erzeugt wird, der die folienförmige(n) Membran(en) auf die Oberfläche des Grundkörpers ansaugt. Durch den Unterdruck wird die folienförmige Membran gleichmäßig und schonend auf der Oberfläche des Grundkörpers gehalten, bis dieser vorzugsweise an seiner zuströmseitigen Seite praktisch vollständig mit der folienförmigen Membran bedeckt ist. Dabei wird das gleichmäßige Auflegen der folienförmigen Membran auf dem Grundkörper noch begünstigt, wenn der Grundkörper beim Auflegen der folienförmigen Membran sich in einer Ebene bewegt und/oder um seine Achse rotiert, während die folienförmige Membran gleichzeitig von einer sich drehenden Folien-Vorratsrolle abgerollt und auf den sich bewegenden Grundkörper aufgelegt wird. Auf diese Weise wird auch eine Beschädigung der dünnen, leicht zu verletzenden, folienförmigen Membran vermieden.

Die erfindungsgemäße Lösung bei der Vorrichtung der eingangs erwähnten Art besteht insbesondere darin, daß diese Vorrichtung eine Halteeinrichtung für den Grundkörper hat, die in einer Ebene bewegbar und/oder um ihre Längsachse drehbar ist, daß sie eine Folien-Vorratsrolle aufweist, und daß eine den Grundkörper beaufschlagende, drehbare Andruckrolle zum Auflegen und Andrücken der von der Vorratsrolle abgerollten folienförmigen Membran vorgesehen ist. In der Halteeinrichtung kann der Grundkörper während des Herstellungsverfahrens fixiert werden. Durch die Dreh- oder Schiebebewegung dieser Halteeinrichtung wird die von der Vorratsrolle ablaufende, kleine Poren aufweisende folienförmige Membran gleichmäßig auf die gewünschte Seite des Grundkörpers aufgetragen. Dabei rückt die den Grundkörper beaufschlagende, drehbare Andruckrolle die folienförmige Membran gleichmäßig auf den Grundkörper auf, so daß diese in dieser Lage untrennbar mit dem Grundkörper verbunden werden kann.

Dabei sieht eine besonders vorteilhafte Weiterbildung der erf indungsgemäßen Vorrichtung eine Saugeinrichtung zum Anlegen eines Unterdruckes an die der folienförmigen Membran abgewandte Setie oder Mantelfläche des Grundkörpers vor. Mit Hilfe dieser Saugeinrichtung kann die auf den Grundkörper aufgelegte folienförmige Membran in ihrer Lage fixiert werden, beispielsweise bis der Grundkörper und die folienförmige Membran untrennbar miteinander ver bunden sind.

Weiterbildungen der Erfindung sind in weiteren Unteransprüchen aufgeführt. Nachstehend wird diese anhand vorteilhafter Ausführungsbeispiele in Verbindung mit den Figuren noch näher erläutert.

Es zeigt:
Fig. 1 eine Vorrichtung zur Herstellung eines Filterelementes, das aus einem grobporigen, rohrförmigen Grundkörper und einer Oberflächenschicht mit kleinen Poren besteht, wobei ein Heizstrahler zum Erweichen des Grundkörpers und zum Verbinden mit der als Oberflächenschicht dienenden folienförmigen Membran vorgesehen ist,
Fig. 2 eine Vorrichtung, ähnlich der aus Fig. 1, wobei statt des Heizstrahlers eine Aufbring-Walze für Kleber, Schmelzkleber, oder dgl. Haftvermittler vorgesehen ist,
Fig. 3 eine Vorrichtung, ähnlich der aus Fig. 1, in einer Seitenansicht, wobei die hier dargestellte , Vorrichtung zur Herstellung flacher Filterelemente dient und eine Saugeinrichtung hat, mit der die folienförmige Membran auf den Grundkörper während des Herstellungsvorganges gehalten werden kann.
Fig. 4 die Vorrichtung aus Fig. 3 in einer perspektivischen Darstellung,
Fig. 5 eine Detail-Schnittdarstellung in Schnittebene A-B aus Fig. 4 in dem Bereich des Filterelementes, in dem beim Herstellungsvorgang die Folie oder dgl. auf den grobporigen Grundkörper aufläuft,
Fig. 6 einen Filter zur Filtration der Ansaugluft eines Verbrennungsmotors in einem Längsschnitt und
Fig. 7 den Filter aus Fig. 6 in einem Querschnitt in Schnittebene A-B aus Fig. 6.

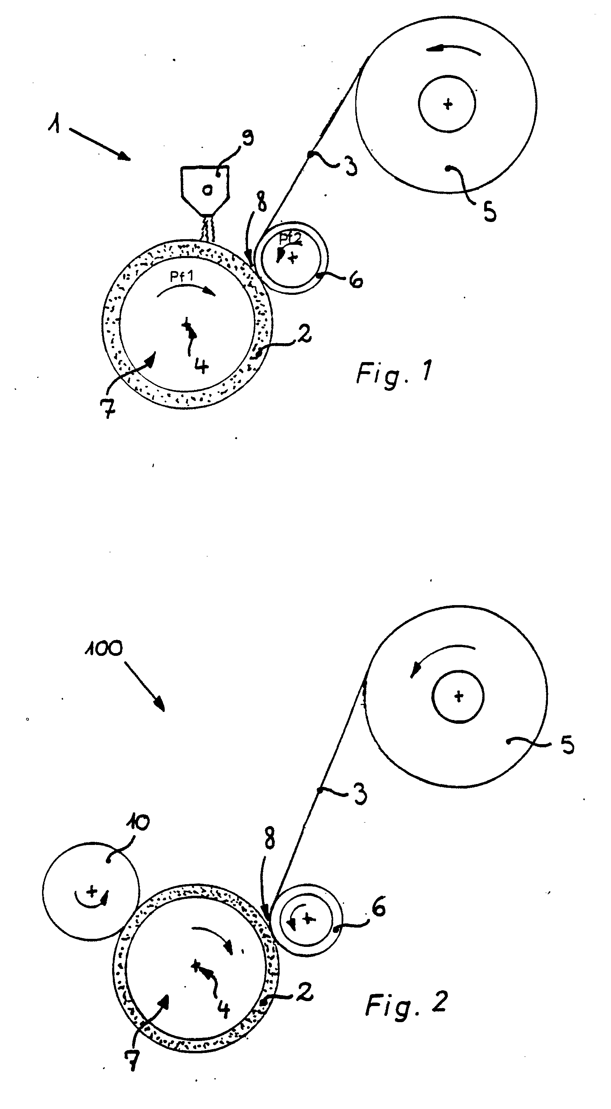

Fig. 1 zeigt eine Vorrichtung 1 zur Herstellung eines Filterelementes, das aus einem grobporigen, rohrförmigen und unbiegsamen Grundkörper 2 mit vorzugsweise geringem hydraulischen Widerstand und einer Oberflächenschicht mit kleinen Poren besteht. Dabei dient als Oberflächenschicht eine dünne blatt- oder folienförmige Membran 3. Sowohl der Grundkörper 2 als auch die folienförmige Membran 3 bestehen bei dem in Fig. 1 dargestellten Ausführungsbeispiel aus demselben, miteinander verschweiß- oder verschmelzbaren Kunststoff oder Thermoplast, beispielsweise aus Polypropylen. Eine solche Materialgleichheit von Grundkörper 2 und folienförmiger Membran 3 ist vorteilhaft, wenn das Filterelement sich beispielsweise durch eine gute chemische Resistenz auszeichnen soll. Die Herstellung der Membran aus einer Suspension ist meist nicht möglich, da die Kornfeinheit beispielsweise eines Thermoplasts zur Erzeugung einer stabilen, sich nicht entmischenden Suspension kaum erhältlich ist. Hingegen sind folienförmige Membranen 3 für das erfindungsgemäße Herstellungsverfahren in den verschiedensten Ausführungen erhältlich.

Während der Grundkörper 2 in einer nicht weiter dargestellten Halteeinrichtung um seine Längsachse 4 im Uhrzeigersinn Pf 1 drehbar gehalten ist, wird die folienförmige Membran 3 von der Vorratsrolle 5 der Vorrichtung 1 abgerollt und auf den Grundkörper 2 aufgelegt. Dabei drückt eine Andruckwalze 6, die den Grundkörper 2 mit geringem Druck beaufschlagt und sich im Vergleich zu diesem in Drehrichtung Pf 2 gegenläufig dreht, die folienförmige Membran 3 auf die äußere Mantelfläche des Grundkörpers 2 auf, die in Gebrauchsstellung die Zuströmseite des Filterelementes bildet.
Die Vorrichtung 1 weist eine - nicht weiter dargestellte -Saugeinrichtung auf, die mit ihrer Saugleitung mit der Innenhöhlung 7 des rohrförmigen Grundkörpers 2 verbunden ist und somit an der äußeren Mantelfläche des Grundkörpers 2 einen Unterdruck erzeugt. Durch die, durch den porösen Grundkörper 2 hindurchgesaugte Luft wird auch die sich von der Vorratsrolle 5 abwickelnde, folienförmige Membran 3 auf den Grundkörper 2 aufsaugt.

Zur Fertigstellung des Filters werden der Grundkörper 2 und die auf ihn aufgelegte folienförmige Membran 3 über eine Schmelzverbindung untrennbar miteinander verbunden. Dazu ist eine hier als energiereicher, linienförmiger Infrarotstrahler ausgebildete Heizeinrichtung 9 vorgesehen, die vor der Berührungsstelle 8 des Grundkörpers 2 mit der folienförmigen Membran 3 die Oberfläche des Grundkörpers 2 auf eine Dicke von ca. 50μm zum Erweichen bringt und dadurch eine Schmelzverbindung dieser Teile 2, 3 ermöglicht.
Bei der Werkstoffkombination Polyethylen/Polyethylen beträgt die Energiedichte der Heizeinrichtung 9 etwa 1000 W/m².

Durch ein solche infrarote oder auch hochfrequente, energiereiche Strahlung kurzer Dauer können die miteinander zu verbindenden Teile 2, 3 an ihrer Oberfläche erhitzt und erweicht werden, so daß sie anschließend miteinander verschmelzbar sind. Die in Drehrichtung Pf 1 des Grundkörpers 2 dem Berührungsbereich 8 nachgeschaltete Andruckwalze 6 drückt anschließend den Grundkörper 2 und die folienförmige Membran 3 mit mäßigem und vorzugsweise regulierbarem Druck aneinander.
Die Vorrichtung 1 aus Fig. 1 eignet sich für solche Filterelemente, deren Grundkörper 2 und deren folienförmige Membran 3 aus gleichen oder unterschiedlichen, jedoch miteinander verschmelzbaren Thermoplasten bestehen. Bestehen die beiden Teile 2, 3 eines Filterelementes jedoch aus eventuell unterschiedlichen und nicht miteinander verschmelzbaren Thermoplasten, z. B. aus Polyacryl und Polytetrafluorethylen, so ist für diesen Fall vorteilhaft die in Fig. 2 dargestellte Vorrichtung 100 einsetzbar. Die Vorrichtung 100 stimmt mit der Vorrichtung 1 aus Fig. 1 in wesentlichen Merkmalen überein. Jedoch ist lediglich statt der Heizeinrichtung 9 (vgl. Fig. 1) bei der Vorrichtung 100 eine Aufbring-Walze 10 vorgesehen, die beispielsweise flüssigen Schmelzkleber auf die mit der folienförmigen Membran 3 zu bedeckende äußere Mantelfläche des Grundkörpers 2 aufbringt. Die Aufbring-Walze 10 entnimmt die Schmelzkleber-Flüssigkeit aus einem - hier nicht weiter dargestellten - Vorratsbehälter.
Der Schmelzkleber bewirkt über eine chemische Reaktion ein Erweichen der Oberflächen von Grundkörper 2 und folienförmiger Membran 3. Nach dem Andrücken durch die Andruckwalze 6 und Aushärten des Schmelzklebers findet die formschlüssige Verbindung zwischen Grundkörper 2 und Membran 3 durch ein mechanisches Verhaken statt.

Soll die Vorrichtung 100 der Herstellung eines Filterelementes dienen, bei dem der Grundkörper 2 aus keramischem Material oder aus Glas und die folienförmige Membran 3 aus keramischem Material bestehen, so ist in dem mit der Aufbring-Walze 10 verbundenen Vorratsbehälter Keramikkleber-Flüssigkeit enthalten, die von der Aufbringwalze auf die außenliegende Grundkörper-Oberfläche übertragen wird. Zweckmäßigerweise ist dabei der Anpreßdruck der Aufbring- Walze 10 so schwach bemessen, daß der Keramikkleber auf der zu verbindenden Oberfläche des Grundkörpers nur auf die dort außenliegenden Körner aufgetragen wird und die zwischen diesen Körnern liegenden Poren des Grundkörpers nicht verschlossen werden.

Die erforderliche untrennbare Verbindung zwischen dem Grundkörper 2 und der folienförmigen Membran 3 kann bei bestimmten, vorbekannten Klebern bei mittleren Temperaturen von etwa 100 bis 150˚ C in einem Ofen erfolgen. Der Haftmechanismus wird hier durch eine chemische Reaktion zwischen dem Kleber und den Werkstoffen des Grundkörpers 2 sowie der folienförmigen Membran 3 erreicht.
Bei hohen Temperaturbeanspruchungen des Filterelementes, beispielsweise bei der Filtration heißer Gase im Bereich von 400 bis 5000˚ C, ist eine Verschmelzung zwischen Grundkörper und Membran notwendig. In diesen Fällen kann die folienförmige Membran 3 auf dem Grundkörper 2 in der Vorrichtung 100 mittels eines Keramikklebers in ihrer Lage vorübergehend fixiert und anschließend der Grundkörper 2 und die folienförmige Membran 3 in einem Einbrennofen miteinander verschmolzen werden. Der hier beim Auflegen der folienförmigen Membran 3 mittels der Aufbring-Walze 10 aufgebrachte Keramikkleber hat in diesem Ausführungsbeispiel nur die Funktion einer vorübergehenden Fixierung beider Teile gegeneinander.

Auf ähnliche Weise ist mittels der Vorrichtung 100 auch ein Filterelement herstellbar, dessen Grundkörper 2 und dessen folienförmige Membran 3 aus gleichen oder unterschiedlichen, jedenfalls erst bei höherer Temperatur miteinander verschmelzbaren Stoffen bestehen, - bei dem der Grundkörper 2 beispielsweise aus gesintertem Metallpulver und die Membranfolie 3 aus keramischem Material hergestellt ist.

Ähnlich wie bei der Herstellung eines nur aus keramischen Teilen 2, 3 bestehenden Filterelementes, wird auch in diesem Fall die auf die Grundkörper-Oberfläche aufgelegte folienförmige Membran in ihrer Lage mittels eines Klebers oder dgl. fixiert, um anschließend in einem Einbrennvorgang mit dem Grundkörper untrennbar verbunden zu werden. Ein solches Herstellungsverfahren entspricht in etwa dem altbekannten Emaillieren, wobei Temperaturen nahe dem Schmelzpunkt des Metalls chemische Reaktionen zwischen Metall und Keramik stattfinden, die im einzelnen bisher noch nicht völlig bekannt sind.

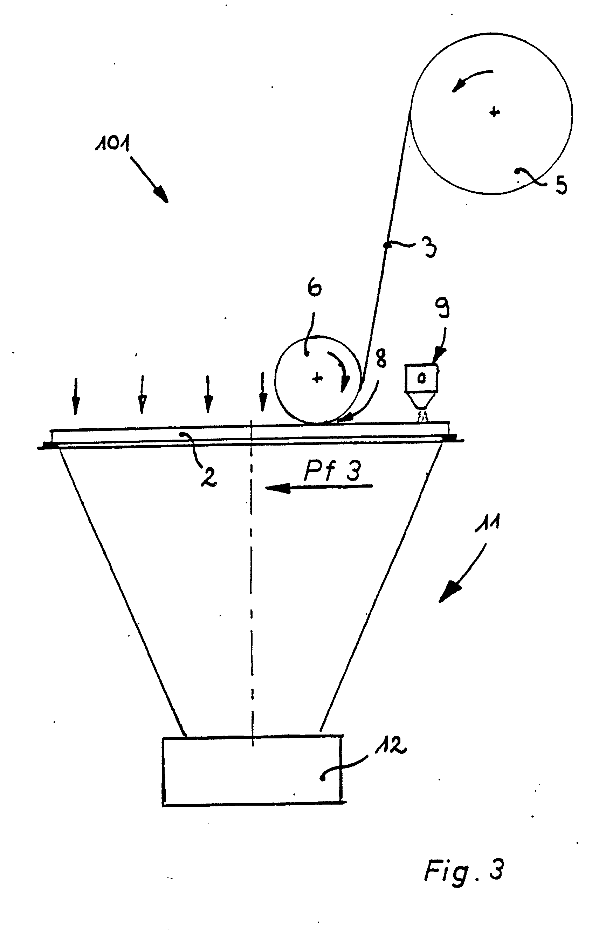

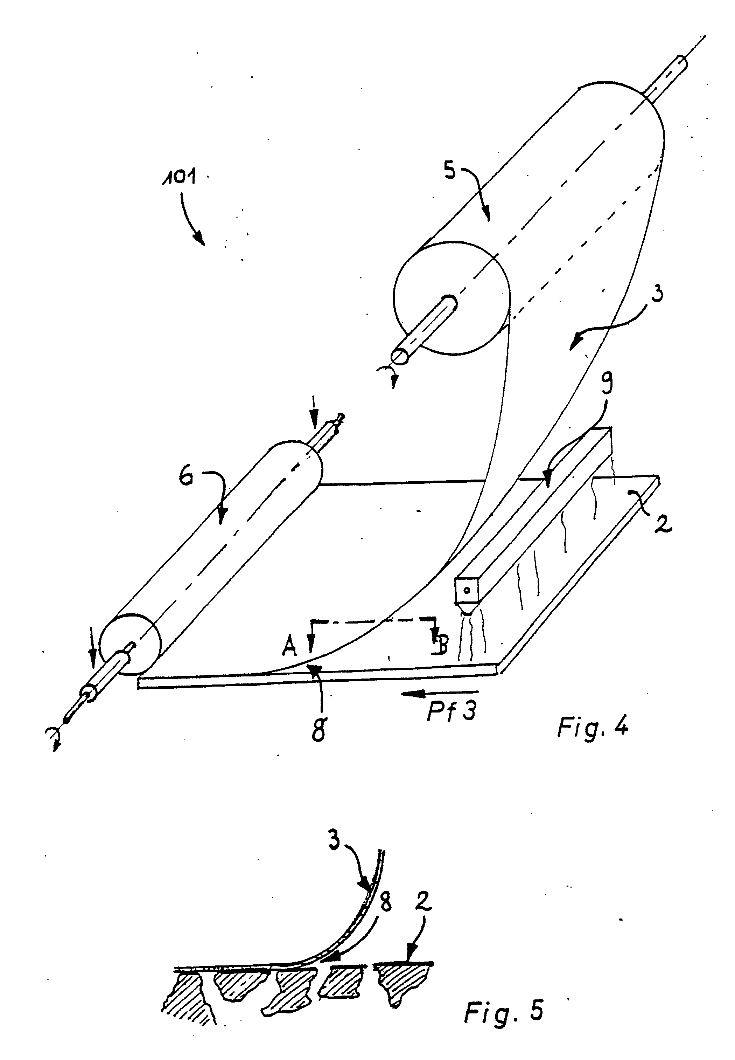

In den Figuren 3 und 4 ist eine Vorrichtung 101 dargestellt, die im wesentlichen der Vorrichtung 1 aus Fig. entspricht, jedoch zur Herstellung eines ebenen oder flachen Filterelementes vorgesehen ist.

Auch bei der Vorrichtung 101 wird die folienförmige Membran 3 von der Folien-Vorratsrolle 5 abgewickelt und auf den grobporigen Grundkörper 2 aufgelegt. Der Grundkörper 2 ist in einer nicht weiter dargestellten Halteeinrichtung gehalten, in der er in Pfeilrichtung Pf 3 in einer Ebene bewegbar ist. Vorzugsweise im Berührungsbereich der folienförmigen Membran 3 mit dem Grundkörper 2 wird diese mittels einer Andruckwalze 6 auf die Auflageseite des Grundkörpers 2 angedrückt.

In Bewegungsrichtung Pf 3 des Grundkörpers 2 vor dem Berührungsbereich 8 ist eine Heizeinrichtung 9 vorgesehen, die die Oberfläche des Grundkörpers zum Erweichen bringt und somit eine Schmelzverbindung der aus miteinander verschmelzbaren Thermoplasten bestehenden Filterelement-Teile 2, 3 ermöglicht.

Auf der der Membranfolie 3 abgewandten Seite des Grundkörpers 2 ist die mit einem Ventilator 12 ausgestattete Saugeinrichtung 11 vorgesehen, die die von der Vorratsrolle 5 abgewickelte folienförmige Membran 3 auf die Oberfläche des Grundkörpers 2 ansaugt und auch für ein Abkühlen des Filterelementes nach Durchlaufen der Heizeinrichtung 9 sorgt.

Die in den Fig. 1 bis 4 dargestellten Ausführungsformen der erfindungsgemäßen Vorrichtung, bei denen der Grundkörper 2 beim Auflegen der Membran 3 sich in einer Ebene bewegt oder um seine Achse rotiert, während die folienförmige Membran 3 gleichzeitig von einer sich drehenden Folien-Vorratsrolle abgerollt und auf den sich bewegenden Grundkörper 2 aufgelegt wird, erlauben verschiedene, auch größere Durchmesser von Rohren und ebene Flächen unterschiedlicher Größe zu beschichten, ohne daß dabei das erfindungsgemäße Herstellungsverfahren an eine bestimmte Badgröße gebunden wäre oder die Feststoffkonzentration beispielsweise an allen Stellen eines Bades gleich gehalten werden müßte, was ein Problem bei suspensionsbeschichteten Filterelementen sein kann. Da bei der Herstellung der erfindungsgemäßen Filterelemente auch keine Feuchtigkeit aus den Poren entfernt werden muß, sind zusätzliche Energieeinsparungen möglich.

In Fig. 5 sind der Grundkörper 2 und die folienförmige Membran 3 im Berührungsbereich 8 des Filterelementes in einer Schnittdarstellung in Schnittebene A-B aus Fig. 4 dargestellt. Deutlich zu erkennen ist die grobporige, körnige Struktur des Grundkörpers, während die folienförmige Membran 3 vergleichsweise dünn ist und kleine Poren aufweist.

Für Zwecke der Filtration hat sich gezeigt, daß die Porenweite des Grundkörpers 2 in einem weiten Bereich von etwa 30 bis 120 $\mu$m und diejenige der folienförmigen Membran von 2 bis 3 $\mu$m bei einer Membran- oder Foliendicke von etwa 30 $\mu$m zur Erfüllung der heute erforderlichen Abscheidewirkung günstig und auch wirtschaftlich noch vertretbar ist. Während der Grundkörper 2 ohne weiteres mit der erforderlichen Porenweite herstellbar ist, sind folienförmige Membranen der geforderten Spezifikation handelsüblich erhältlich.

Ein wesentlicher Vorteil des erfindungsgemäßen Filterelementes ist auch in der Betriebssicherheit seines Verbundwerkstoffes zu sehen. Durch die untrennbare Vierbindung eines unbiegsamen, , grobporigen Grundkörpers mit einer oberflächlichen dünnen, feinporigen Folienschicht wird verhindert, daß die für sich allein oder in Verbindung mit einem biegsamen Grundkörper leicht eintretende Beschädigung der folienförmigen Membran durch Knicken zu Membranbrüchen und nachfolgendem Staubdurchtritt führt. Ein weiterer Vorteil des erfindungsgemäßen Filterelementes besteht auch in der glatten Oberfläche seiner zuströmseitigen Folienschicht, die ein leichtes Abfallen des abgeschiedenen Staubes von der Filteroberfläche bewirkt und der Ausbildung eines dickeren Staubkuchens und damit eines höheren Wider tandes an der Oberfläche des Filterelementes entgegenwirkt.

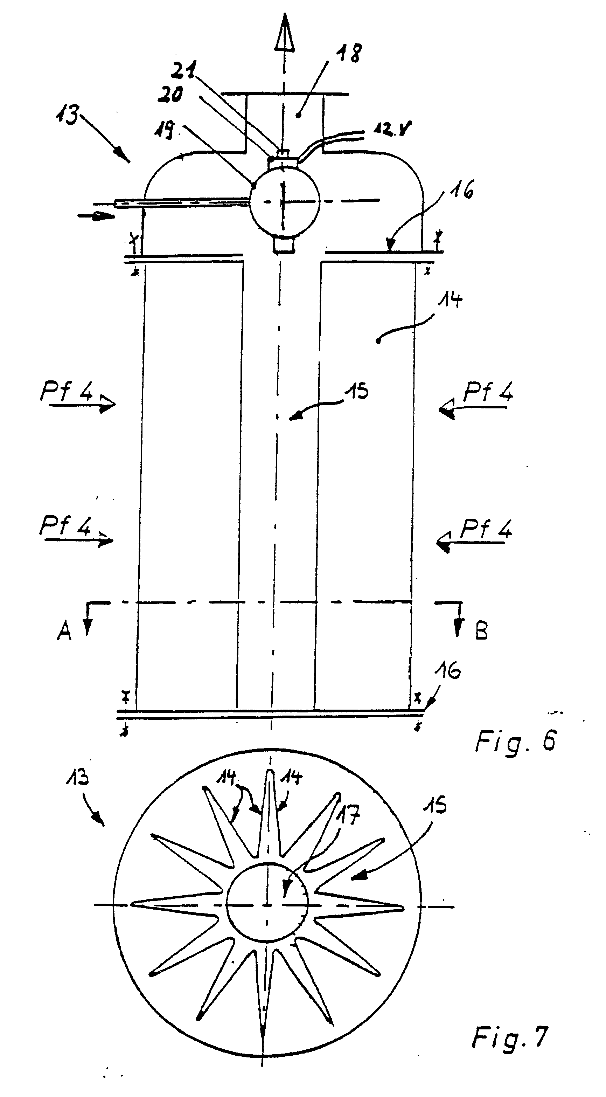

In den Figuren 6 und 7 ist als Beispiel für die Verwendung eines erfindungsgemäßen Filters ein Filter 13 zur Filtrierung der Ansaugluft stationärer oder mobiler Kraftmaschinen, wie Gasturbinen, Verbrennungskraftmaschinen oder Kompressoren dargestellt.

Im Filter 13 aus Figur 6 und 7 besteht der filtrierende Einsatz 14 aus spitzwinklig zueinander angeordneten und zu einem sternförmigen Hohlraumkörper 15 zusammengesetzten, ebenen Platten 14. Derartige sternförmige, mit durchgängigen Poren versehene Gebilde sind auch handelsüblich erhältlich. Sowohl die in Sternform gesinterten als auch die als Einzelplatten 14 zusammengesetzten Hohlraumkörper können unter Anwendung des beschriebenen Verfahrens mit einer folienförmigen Membran beschichtet werden.

Mit oberen und unteren Deckscheiben 16 abgedichtet, entsteht auf diese Weise ein Filter, bei dem die staubhaltige Ansaugluft zum filtrierenden Einsatz 14 geleitet wird und, nachdem der Staub an der Membranfolienschicht des Teils 15 zurückgehalten wurde, nach dem Durchströmen der plattenförmigen Wände im Innenraum 17 des Hohlraumkörpers 15 gesammelt und durch die Austrittsöffnung 18 des Filters nach oben abgeführt wird.

Zur Abreinigung des Staubes von der zuströmseitigen Oberfläche der Platten 14 wird aus einem im Filterkopf angeordneten Behälter 19 nach Betätigung eines Ventils 20 in bekannter Weise Druckluft impulsartig in das Innere des Filterelementes eingebracht und damit der an der Plattenoberfläche des Elements 15 haftende Staub durch eine der normalen Filterströmung entgegengesetzte Strömung abgeblasen.

Im Gegensatz zu den für gleiche Einsatzfälle heute üblichen Filtern, bei denen der Staub bis zum Auswechseln im Filtergehäuse bzw. zwischen den Filterwänden verbleibt, wird hier der abgeschiedene Staub aus dem Filter entfernt. Durch diese Regenerierung kann der bisherige Austausch des Filters unterbleiben, was wiederum eine wesentlich längere Standzeit zur Folge hat.

Alle vorbeschriebenen oder in den Ansprüchen aufgeführten Einzelmerkmale können einzeln oder in beliebiger Kombination miteinander erfindungswesentlich sein.

## Ansprüche

1. Filterelement mit einem grobporigen, unbiegsamen Grundkörper, der - vorzugsweise zuströmseitig - mit einer Oberflächenschicht mit kleinen Poren versehen ist, **dadurch gekennzeichnet,** daß der Grundkörper (2) im wesentlichen- aus gesintertem Metall, Kunststoff, Glas oder keramischem Material besteht, und daß als Oberflächenschicht mit kleinen Poren zumindest eine separate blatt- oder folienförmige, poröse Membran (3) aus Kunststoff, Metall oder Keramik vorgesehen ist, und daß diese Membran mit dem Grundkörper (2) untrennbar verbunden ist.

2. Filterelement nach Anspruch 1, dadurch gekennzeichnet, daß der Grundkörper (2) eine rohrförmige oder flächenförmige Gestalt hat.

3. Filterelement nach Anspruch 1 oder 2, dadurch gekennzeichnet, daß der Grundkörper (2) nur einen geringen hydraulischen Widerstand hat, und daß dazu der Grundkörper (2) vorzusweise eine geringe Wandstärke und insbesondere eine große Porengröße aufweist.

4. Filterelement nach einem oder mehreren der Ansprüche 1 bis 3, dadurch gekennzeichnet, daß der Grundkörper (2) und die zunächst separate folienförmige Membran im wesentlichen aus demselben verschmelzbaren Kunststoff-, Metall- oder Keramik-Material, vorzugsweise aus demselben Thermoplast, insbesondere aus Polyethylen, bestehen.

5. Filterelement nach einem oder mehreren der Ansprüche bis 3, dadurch gekennzeichnet, daß der Grundkörper (2) und die folienförmige Membran im wesentlichen aus unterschiedlichen Thermoplasten bestehen, und daß der Grundkörper vorzugsweise aus Polyethylen oder Polypropylen und die folienförmige Membran insbesondere aus Polytetrafluorethylen besteht.

6. Filterelement nach einem oder mehreren der Ansprüche 1 bis 5, dadurch gekennzeichnet, daß der Grundkörper (2) und die folienförmige Membran (3) mittels eines Klebers oder dgl. untrennbar miteinander verbunden oder vorübergehend bis zu einem Verschmelzungsvorgang in ihrer Lage zueinander fixiert sind.

7. Filterelement nach einem oder mehreren der Ansprüche 1 bis 6, dadurch gekennzeichnet, daß die Porenweite des Grundkörpers etwa 30 bis 120 μm, vorzugsweise etwa 40 μm und diejenige der folienförmigen Membran (3) etwa 2 bis 3 um beträgt und daß die folienförmige Membran (3) insbesondere eine Dicke von etwa 20 bis 30 μm hat.

8. Verfahren zur Herstellung eines Filterelementes, insbesondere nach einem oder mehreren der Ansprüche 1 bis 7, **dadurch gekennzeichnet,** daß auf einen grobporigen, unbiegsamen Grundkörper (2) zumindest eine dünne, kleine Poren aufweisende folienförmige Membran (3) aufgelegt wird, und daß diese als Oberflächenschicht des Filterelementes dienende(n) folienförmige(n) Membran(en) anschließend mit dem Grundkörper (2) untrennbar verbunden wird (werden).

9. Verfahren nach Anspruch 8, dadurch gekennzeichnet, daß der Grundkörper (2) und die folienförmige Membran nach dem Auflegen durch Verschmelzen, durch Verkleben oder durch mechanisches Haften miteinander verbunden werden.

10. Verfahren nach Anspruch 8 oder 9) dadurch gekennzeichnet, daß zum Auflegen der folienförmigen Membran(en) ein Unterdruck am Grundkörper (2) erzeugt wird, der die folienförmige(n) Membran(en) (3) auf die Oberfläche des Grundkörpers (2) ansaugt.

11. Verfahren nach einem oder mehreren der Ansprüche 8 bis 10, dadurch gekennzeichnet, daß der Grundkörper (2) beim Auflegen der folienförmigen Membran (3) sich in einer Ebene bewegt und/oder um seine Achse rotiert, während die folienförmige Membran (3) gleichzeitig von einer sich drehenden Folien-Vorratsrolle (5) abgerollt und auf den sich bewegenden Grundkörper (2) aufgelegt wird.

12. Verfahren nach einem oder mehreren der Ansprüche 8 bis 11, dadurch gekennzeichnet, daß der Grundkörper (2) und die folienförmige(n) Membran(en) (3) aus miteinander thermisch verschmelzbaren Thermoplasten bestehen, und daß vor dem Auflegen der folienförmigen Membran (3) auf den Grundkörper (2) dessen mit der Membran (3) zu verbindende Oberfläche und/oder die gegenüberliegende Oberfläche der Membran (3) mittels infraroter oder hochfrequenter Strahlung mit hoher Energiedichte erweicht und angeschmolzen wird (werden).

13. Verfahren nach einem oder mehreren der Ansprüche 8 bis 11, dadurch gekennzeichnet, daß der Grundkörper (2) und die folienförmige(n) Membran-(en) (3) aus unterschiedlichen Kunststoffen oder Thermoplasten bestehen und mittels eines die zu verbindende Oberfläche des Grundkörpers (2) und/oder die Oberfläche der folienförmigen Membran (3) erweichenden Schmelzklebers miteinander verbunden werden.

14. Verfahren nach einem oder mehreren der Ansprüche 8 bis 11, dadurch gekennzeichnet, daß der Grundkörper (2) aus Glas oder Keramik und die folienförmige(n) Membran(en) aus Keramik bestehen, daß der Grundkörper (2) und die Membran(en) (3) mittels eines Keramikklebers verbunden werden, und daß die mittels des Keramikklebers miteinander verbundenen Teile (2, 3) des Filterelementes anschließend zum Aushärten des Klebers auf eine unterhalb ihrer Schmelztemperatur liegende Temperatur erhitzt werden.

15. Verfahren nach einem oder mehreren der Ansprüche 8 bis 11, dadurch gekennzeichnet, daß der Grundkörper (2) und die folienförmige(n) Membran-(en) (3) aus Metall, Keramik, Glas oder dgl. vorzugsweise erst bei höherer Temperatur miteinander verschmelzbaren Stoffen bestehen, daß die folienförmige(n) Membran(en) mittels eines Klebers, insbes. mittels eines Keramikklebers oder dgl., auf dem Grundkörper (2) in ihrer Lage fixiert wird (werden), und daß der Grundkörper (2) und die Membran(en) (3) anschließend auf eine Temperatur erhitzt werden, bei der diese Filterelement-Teile (2, 3) miteinander verschmelzen.

16. Verfahren nach einem oder mehreren der Ansprüche 8 bis 15, dadurch gekennzeichnet, daß der Grundkörper (2) und die folienförmige(n) Membran-(en) (3) mittels eines Klebers verbunden werden, der nach dem Aushärten eine mechanische Verklammerung dieser Teile (2, 3) des Filterelmentes bewirkt.

17. Verfahren nach einem oder mehreren der vorstehenden Ansprüche, dadurch gekennzeichnet, daß der vorzugsweise flüssige Kleber, Schmelzkleber oder dgl. vor dem Auflegen der folienförmigen Membran (3) zweckmäßigerweise mittels einer Aufbringwalze (10) insbesondere auf die Oberfläche des Grundkörpers (2) aufgetragen wird, und daß ,auf diese Oberfläche anschließend die folienförmige Membran (3) aufgelegt und angedrückt wird.

18. Verfahren nach Anspruch 17, dadurch gekennzeichnet, daß der Anpreßdruck der Aufbringwalze (10) auf den Grundkörper (2) so schwach bemessen wird, daß der Kleber oder dgl. auf der zu verbindenden Oberfläche des Grundkörpers (2) mittels der Aufbringwalze (10) nur auf die dort außenliegenden Körner aufgetragen wird.

19. Vorrichtung zur Durchführung des Verfahrens nach einem oder mehreren der Ansprüche 8 bis 18, dadurch gekennzeichnet, daß die Vorrichtung (1, 100, 101) eine Halteeinrichtung für den Grundkörper (2) hat, die in einer Ebene bewegbar und/oder um ihre Längsachse (4) drehbar ist, daß sie (1, 100, 101) eine Folien-Vorratsrolle (5) aufweist, und daß eine den Grundkörper (2) beaufschlagende, drehbare Andruckrolle (6) zum Auflegen und Andrücken der von der Vorratsrolle (5) abgerollten folienförmigen Membran (3) vorgesehen ist.

20. Vorrichtung nach Anspruch 19, dadurch gekennzeichnet, daß eine Saugeinrichtung (11) zum Anlegen eines Unterdruckes an die der folienförmigen Membran (3) abgewandte Seite oder Mantelfäche des Grundkörpers (2) vorgesehen ist.

21. Vorrichtung nach Anspruch 19 oder 20, dadurch gekennzeichnet, daß der Anpreßdruck der Andruckrolle (6) auf den Grundkörper (2) einstellbar ist.

22. Vorrichtung nach einem oder mehreren der Ansprüche 19 bis 21, dadurch gekennzeichnet, daß zum Aufbringen von Kleber, Schmelzkleber oder dgl. auf den Grundkörper (2) eine den Grundkörper (2) beaufschlagende Aufbring-Walze (10) vorgesehen ist.

23. Vorrichtung nach einem oder mehreren der Ansprüche 19 bis 22, dadurch gekennzeichnet, daß eine Heizeinrichtung (9)) vorzugsweise ein Infrarotstrahler oder eine Heizeinrichtung mit hochfreqenter Strahlung von hoher Energiedichte, zum Erweichen der Oberfläche des Grundkörpers (2) und/oder der folienförmigen Membran (3) vorgesehen ist, und daß diese Heizeinrichtung (9) in Dreh- oder Bewegungsrichtung (Pf 1, Pf 3) vorzugsweise unmittelbar vor der Andruckwalze (6) vorgesehen ist.

Fig. 1

Fig. 2

Fig. 3

101

5

3

6

9

2

A

B

Pf 3

8

*Fig. 4*

3

8

2

*Fig. 5*

Fig. 6

Fig. 7